# EUROPÄISCHE PATENTANMELDUNG

(11) **EP 0 713 822 A2**
(43) Veröffentlichungstag der Anmeldung: **29.05.1996**
(21) Anmeldenummer: 95118328.4
(22) Anmeldetag: 22.11.1995
(51) Int. Cl.: B62M 9/04, F16H 9/16

(54) **Stufenlos verstellbares Riemengetriebe für Fahrräder oder dgl. und Steuerung eines solchen Riemengestriebes**

(30) Priorität: 22.11.1994 DE 4441430
(71) Anmelder: Buchheister, Ingo, D-41564 Kaarst (DE)
(72) Erfinder:
(74) Vertreter: Cohausz & Florack

(57) **Zusammenfassung**

Dargestellt und beschrieben sind ein Riemengetriebe für Fahrräder od. dgl., mit wenigstens zwei, jeweils in ihrem Wirkdurchmesser stufenlos vertellbaren Umlenkeinheiten und wenigstens einem mit den Umlenkeinheiten zusammenwirkenden Treibriemen, wobei jede Umlenkeinheit zwei kegelartige Scheiben aufweist und wobei ein Verstellantrieb zur axialen Verstellung zweier zusammenwirkender kegelartiger Scheiben vorgesehen ist. Dazu sind die von dem Treibriemen (3) umschlungenen Umlenkeinheiten (1) auf der Pedalwelle (P) und auf der Nabenwelle (N) jeweils schwimmend gelagert und es ist eine Steuerung zur abgestimmten, gegenläufigen Verstellbewegung der Umlenkeinheiten (1) vorgesehen. und weist die Steuerung einen Sensor zum Detektieren von äußeren Parametern und einen Mikroprozessor auf, der aufgrund der detektierten Werte eine Beeinflussung des Übersetzungsverhältnisses in Abhängigkeit von äußeren Parametern bewirkt.

## Beschreibung

Die Erfindung betrifft ein Riemengetriebe für Fahrräder oder dgl., mit wenigstens zwei, jeweils in ihrem Wirkdurchmesser stufenlos verstellbaren Umlenkeinheiten und wenigstens einem mit den Umlenkeinheiten zusammenwirkenden Treibriemen, wobei jede Umlenkeinheit zwei kegelartige Scheiben aufweist und wobei ein Verstellantrieb zur axialen Verstellung zweier zusammenwirkender kegelartiger Scheiben vorgesehen ist.

Riemengetriebe sind aus der Antriebstechnik seit langem bekannt. So beschreibt die DE-B-2 744 947 ein stufenlos einstellbares Kegelscheiben-Umschlingungsgetriebe mit zwei Kegelscheibensätzen, wobei eine Scheibe als Losscheibe und die zweite Scheibe als Festscheibe ausgebildet ist. Dabei ist von Nachteil, daß die Führung des verwendeten Treibriemens in einer einzigen Ebene nicht möglich ist. Dies hat wiederum, insbesondere bei mit geringem Abstand zueinander angeordneten Kegelscheibensätzen, einen entsprechend hohen Verschleiß des Treibriemens zur Folge.

Wenn im folgenden lediglich der Einfachheit halber von "Fahrradantrieben" die Rede ist, so sollen hiervon sämtliche Tretantriebe umfaßt sein, wie sie auch beispielsweise bei Dreirädern, Kett-Cars oder dgl. zu finden sind.

Fahrradantriebe sind konventionell mit einem Kettengetriebe ausgestattet, jedoch ist aufgrund der ständigen Weiterentwicklungen der Fahrradantriebe bereits ein Riemengetriebe vorgeschlagen worden (DE-C-4 318 648), bei dem zwei in ihren jeweiligen Wirkdurchmessern veränderbare Riemenscheiben verwendet werden, von denen jede aus mehreren, zwischen radial inneren und äußeren Anschlägen beweglich gelagerten, in Umfangsrichtung gleichmäßig versetzten, federvorgespannten Segmenten besteht, wobei sich der Wirkdurchmesser von Antriebsriemenscheibe und Abtriebsriemenscheibe umgekehrt proportional verändern läßt. Dieses bekannte stufenlos verstellbare Riemengetriebe ist nachteilig, da es einerseits nur einen gewissen, beschränkten Verstellbereich der einzelnen Wirkdurchmesser zuläßt und andererseits mit einer sehr hohen Treibriemen-Vorspannung arbeiten muß, da aufgrund der einzelnen verstellbaren Segmente nicht die gesamte zur Verfügung stehende Umschlingungslänge ausgenutzt werden kann.

Ein Riemengetriebe mit den Merkmalen des Oberbegriffs von Patentanspruch 1 ist aus der DE-A-4 305 343 bekannt. Eine abgestimmte, gegenläufige Verstellbewegung der dort beschriebenen kegelartigen Scheiben ist ohne zusätzliche Spanelemente nicht möglich. Darüber hinaus ist jeweils eine der zusammenwirkenden kegelartigen Scheiben fest verankert, so daß bei einer gegenläufigen Bewegung der jeweils freien kegelartigen Scheibe ein Schieflauf des Treibriemens eintritt.

Davon ausgehend liegt der vorliegenden Erfindung die Aufgabe zugrunde, das eingangs erwähnte und zuvor näher beschriebene Riemengetriebe so auszugestalten und weiterzubilden, daß die vorerwähnten Nachteile vermieden werden, ohne auf die stufenlose Verstellbarkeit verzichten zu müssen. Des weiteren soll das Riemengetriebe zuverlässig und robust sein sowie eine kompakte Bauweise ermöglichen, um insbesondere als Fahrradantrieb eingesetzt werden zu können.

Des weiteren soll eine Steuerung eines solchen Riemengetriebes geschaffen werden, welche neben der eigentlichen Aussteuerung des Getriebes auch noch Umgebungseinflüsse berücksichtigen kann.

Hinsichtlich des Riemengetriebes wird die Aufgabe erfindungsgemäß dadurch gelöst, daß die von dem Treibriemen umschlungenen Umlenkeinheiten auf der Pedalwelle und auf der Nabenwelle jeweils schwimmend gelagert sind und daß eine Steuerung zur abgestimmten, gegenläufigen Verstellbewegung der Umlenkeinheiten vorgesehen ist.

Bezüglich der Steuerung besteht die Lösung der Aufgabe darin, daß die Steuerung einem Sensor zum Detektieren von äußeren Parametern und einen Mikroprozessor aufweist, der aufgrund der detektierten Werte eine Beeinflussung des Übersetzungsverhältnisses in Abhängigkeit von äußeren Parametern bewirkt.

Das erfindungsgemäße Riemengetriebe hat den großen Vorteil, daß bei verhältnismäßig kleiner Bauweise ein großer Verstellbereich des Wirkdurchmessers erzielt werden kann. So lassen sich problemlos Übersetzungsbereiche realisieren, die das gesamte Spektrum der auf dem Markt befindlichen 21-Gang-Kettenschaltungen abdecken und sogar darüber hinausgehen.

In bevorzugter Ausgestaltung der Erfindung weisen die eingesetzten kegelartigen Scheiben eine Mantelfläche mit konstanter Steigung auf. Es ist jedoch auch denkbar, daß die kegelartigen Scheiben eine konkav oder konvex gewölbte Mantelfläche aufweisen.

In weiterer Ausgestaltung der Erfindung sind die jeweils zusammenwirkenden kegelartigen Scheiben ineinandergreifend ausgebildet, wodurch die Baugröße weiter verringert werden kann und insbesondere die verwendeten Keilriemen einen geringen Querschnitt aufweisen können.

Für die ineinandergreifende Ausbildung sind nach einer weiteren Lehre der Erfindung die jeweils zusammenwirkenden kegelartigen Scheiben mit einander entsprechenden, entweder radial verlaufenden oder aber parallel verlaufenden Eingriffsausnehmungen versehen. Dabei ist die erstgenannte Variante besonders schonend für den verwendeten Keilriemen und die zweite Alternative konstruktiv einfach herstellbar.

Je nach Ausgestaltung der eingesetzten kegelartigen Scheiben ist auch der Querschnitt des Treibriemens auszuwählen. So wird gemäß einer weiteren Lehre der Erfindung bei kegelartigen Scheiben mit konstanter Steigung ein mit entsprechender Steigung versehener Keilriemen verwendet; es ist jedoch auch möglich, Treibriemen mit rundem Querschnitt einzusetzen.

Darüber hinaus ist es denkbar, daß die verwendeten kegelartigen Scheiben in ihrer Oberfläche so ausgestaltet sind, daß die in Zugrichtung wirkenden Oberflächen mit hoher, großer Reibung ausgestattet sind, während in Verstellrichtung, also insbesondere im Bereich der Eingriffsausnehmungen, glatt polierte Oberflächen zum Erreichen einer optimalen Gleitreibung gewählt werden. Dabei versteht es sich, daß die Reibung zwischen Treibriemen und Scheibe in Zugrichtung möglichst groß sein muß und in auf die Scheiben bezogen radialer Richtung geringer sein kann, um eine leichte Verstellung, ggf. auch im Stand, zu ermöglichen. Dies läßt sich beispielsweise durch eine entsprechende Beschichtung realisieren.

Der bei dem erfindungsgemäßen Riemengetriebe verwendete Verstellantrieb kann in weiterer Ausgestaltung der Erfindung so ausgebildet sein, daß die jeweils zusammenwirkenden kegelartigen Scheiben gleichzeitig gegeneinander verstellbar sind. Dies kann beispielsweise auch automatisch geschehen. Auf diese Weise ist zuverlässig gewährleistet, daß sich der Treibriemen immer in der gleichen Ebene befindet.

Nach weiteren Lehren der Erfindung kann der Verstellantrieb mechanisch, hydraulisch, elektrohydraulisch oder elektrisch bzw. auch in Kombination der vorgenannten Antriebsmöglichkeiten ausgeführt sein.

Dabei kann bei einem mechanischen Verstellantrieb die Trittenergie die notwendigen Kräfte zur axialen Verstellung der kegelartigen Scheiben bereitstellen. Besonders bevorzugt wird ein hydraulischer Verstellantrieb, da dieser sich auch unter Last sehr leicht schalten läßt. Elektrohydraulische oder elektrische Verstellantriebe haben darüber hinaus den Vorteil einer besonders einfachen Bedienung.

Dabei ist bei der Verwendung als Fahrradantrieb ein Bedienen unmittelbar vom Lenkrad aus problemlos möglich, wodurch auch die Attraktivität des erfindungsgemäßen Riemengetriebes für solche Fahrradbenutzer steigt, die aufgrund der Schalthebelanordnung für bisherige Kettenschaltungen kein Interesse zeigten. In weiterer Ausgestaltung der Erfindung ist insbesondere eine Einhandbedienung vorgesehen, mit der ein besonders leichtes Schalten möglich ist.

Neben den eigentlichen Verstellantrieben, die für jede Umlenkeinheit vorhanden sein müssen, sorgt erfindungsgemäß eine Steuerung für die abgestimmte gegenläufige Verstellbewegung der von dem Treibriemen umschlungenen Umlenkeinheiten. Diese Steuerung ist notwendig, da die jeweils gleichzeitige Vergrößerung bzw. Verkleinerung der Wirkdurchmesser so erfolgen muß, daß sich die Vorspannung im Treibriemen nicht, oder zumindest nicht wesentlich ändert. Eine solche Steuerung kann elektrisch, elektronisch, mechanisch oder auch hydraulisch arbeiten, wobei die elektronische Steuerung besonders zweckmäßig ist, da mit ihr besondere Antriebssituationen fest programmiert voreingestellt werden können.

Damit stets die optimale Vorspannung des Treibriemens gewährleistet ist, sind nach einer weiteren Lehre der Erfindung neben dem Verstellantrieb weitere Verstellmittel zur axialen Verstellung wenigstens zweier zusammenwirkender kegelartiger Scheiben vorgesehen. Auf diese Weise kann stets eine optimale Vorspannung des Treibriemens erreicht werden, ohne den eigentlichen Verstellantrieb verändern zu müssen. Insbesondere läßt sich auf diese Weise die Verwendung einer - sonst ggf. notwendigen - Spannrolle vermeiden.

Die erfindungsgemäße Steuerung eines stufenlos verstellbaren Riemengetriebes der zuvor näher beschriebenen Art sieht vor, daß nicht nur die eigentliche Abhängigkeit der verwendeten Verstellantriebe, sondern darüber hinaus auch noch äußere Parameter berücksichtigt werden können.

Hierbei ist es beispielsweise möglich, als äußeren Parameter die Fahrraddrehzahl zu messen. Dies kann durch handelsübliche Sensoren geschehen, wie sie beispielsweise ebenfalls bei Fahrrad-Tachometern eingesetzt werden. Diese Sensoren erhalten pro Umdrehung einen Impuls von einem an den Speichen des Rades befestigten Magneten. Die Auswertung erfolgt dabei durch einen mit den Daten gemäß den detektierten Impulsen gespeisten Mikrocomputer. Diese Art der Messung der Fahrraddrehzahl läßt sich auch auf die Messung der Tretnabendrehzahl anwenden, welche als weiterer äußerer Parameter abgefragt werden kann.

In weiterer Ausgestaltung der Erfindung wird als äußerer Parameter die Fahrradneigung bezüglich der Fahrwegsteigung gemessen. Dabei kann beispielsweise ein pendelnd aufgehängter Sensor mehr oder weniger in ein Magnetfeld eintauchen, so daß die induzierte Spannung das Maß für die Abfrage Tal- oder Bergfahrt bzw. der konkreten Fahrwegsteigung sein kann.

Eine weitere Lehre der Erfindung sieht vor, daß als äußerer Parameter die jeweilige Windsituation gemessen werden kann. Dafür ist in einfachster Ausgestaltung ein Windgetriebener Propeller vorgesehen, der einen kleinen Generator antreibt. Um den "normalen" Fahrtwind auszuschließen, kann entweder das Trägheitsmoment der Generatorwelle vergrößert werden, so daß erst nach der Überwindung dieses Trägheitsmomentes, d.h. bei stärkerem Gegenwind, das gewünschte Signal entsteht und weiter verarbeitet werden kann. Andererseits ist es jedoch auch möglich, den Impuls des "normalen" Fahrtwindes durch einen Mikrocomputer anhand vorgegebener oder einstellbarer Basisdaten herauszurechnen.

So ist es nicht nur möglich, die Geschwindigkeit des Fahrrades mit einzubeziehen, sondern spezifische Situationen, wie Raddrehzahl, Antriebswellendrehzahl, Steigung der Straße, Windstärke oder dgl. zu berücksichtigen.

Nach einer weiteren Lehre der Erfindung kann darüber hinaus die Steuerung eines stufenlos verstellbaren Riemengetriebes persönliche Belange des Fahrradbenutzers berücksichtigen. Dabei kann aufgrund einer "intelligenten" Steuerung das vom Hersteller auf vorgegebene Werte voreingestellte Riemengetriebe an die persönlichen Belange des Benutzers, also an dessen Alter, Geschlecht, Konstitution etc. angepaßt werden.

Diese "Vorprogrammierung" kann durch eine entsprechende Ausgestaltung der gefrästen Steuernuten "werksseitig" realisiert werden, jedoch ist es auch möglich, über eine Mikroprozessorsteuerung die entsprechenden Signale an die Verstelleinrichtung abzugeben, so daß sich die jeweils zusammenwirkenden kegelartigen Scheiben schneller oder langsamer gegeneinander verstellen.

Darüber hinaus läßt sich auch ein "Automatikbetrieb" realisieren. Hierzu wird beispielsweise der weiter oben beschriebene Impuls der Fahrraddrehzahl für eine automatische Verstellung so aufbereitet, daß entsprechend einer vorwählbaren Umfangsgeschwindigkeit (beispielsweise 15 km/h) die kegelartigen Scheiben des Riemengetriebes eine bestimmte Stellung aufweisen und daß bei einer höheren Geschwindigkeit (beispielsweise 20 km/h) eine andere, fest vorgegebene Stellung des Riemengetriebes eingenommen wird. Auf diese Weise ist es möglich, trotz unterschiedlich gefahrener Geschwindigkeiten eine einheitliche Trittfrequenz einzuhalten. Diese Trittfrequenz (beispielsweise 45 U/min) kann - aufgrund des großen Verstellbereiches des erfindungsgemäßen Riemengetriebes - auch bereits zum Anfahren wirksam werden.

Die Erfindung wird nachfolgend anhand einer bevorzugte Ausführungsbeispiele darstellenden Zeichnung näher erläutert. In der Zeichnung zeigen
- Fig. 1: ein erstes Ausführungsbeispiel einer verstellbaren Umlenkeinheit im Querschnitt,
- Fig. 2: ein weiteres Ausführungsbeispiel einer verstellbaren Umlenkeinheit im Querschnitt,
- Fig. 3a und 3b: weitere mögliche Ausführungsformen der verstellbaren Umlenkeinheiten in prinzipieller Darstellung,
- Fig. 4: eine Prinzipskizze der zur Verstellung der Umlenkeinheiten verwendeten Steuerung,
- Fig. 5: eine weitere Ausführungsform der zur Verstellung verwendeten Steuerung,
- Fig. 6: das erfindungsgemäße Riemengetriebe in einem ersten Ausführungsbeispiel und
- Fig. 7: das erfindungsgemäße Riemengetriebe in einem zweiten Ausführungsbeispiel.

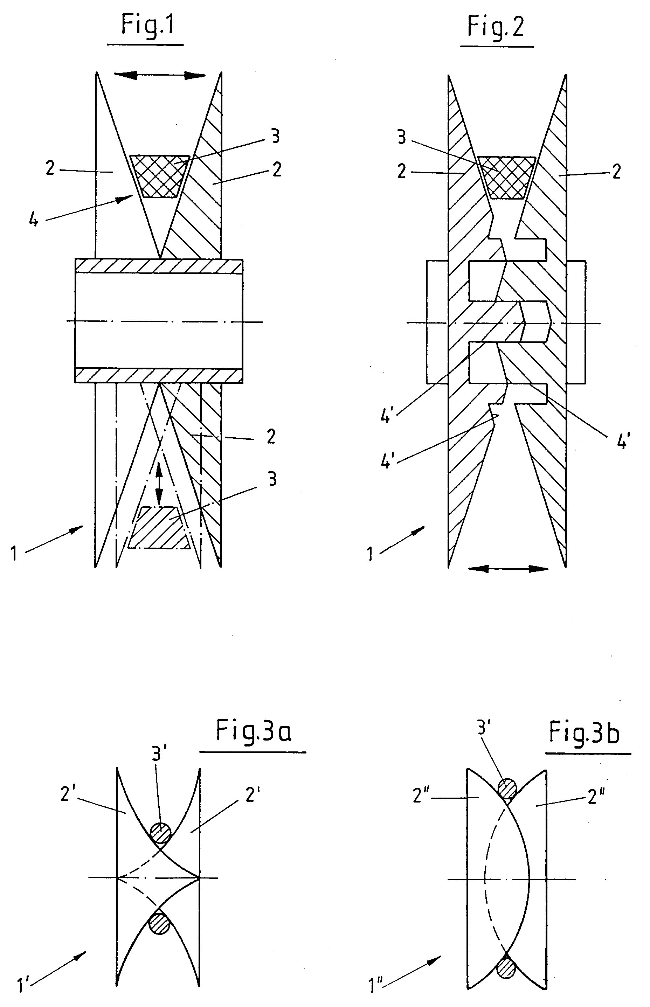

In Fig. 1 ist lediglich prinzipiell eine Umlenkeinheit mit zwei verstellbaren, kegelartigen Scheiben 2 und einem Treibriemen 3 dargestellt. Es ist erkennbar, daß die jeweils zusammenwirkenden kegelartigen Scheiben 2 ineinandergreifend ausgebildet sind. Die kegelartigen Scheiben 2 weisen dabei im wesentlichen radial verlaufende Eingriffsausnehmungen 4 auf, d.h. die ineinanderverzahnten Segmente greifen jeweils in den Zwischenraum der benachbarten gegenüberliegenden Segmente ein. Im unteren Teil ist strichpunktiert dargestellt, wie die kegelartigen Scheiben 2 ineindergreifen. Der strichzweipunktiert dargestellte Treibriemen 3 bewegt sich dabei von der Mittelachse weg. In Fig. 2 ist dargestellt, daß die jeweils zusammenwirkenden kegelartigen Scheiben 2 auch parallel verlaufende Eingriffsausnehmungen 4' aufweisen können.

Während in den Fig. 1 und 2 die kegelartigen Scheiben 2 eine Mantelfläche mit konstanter Steigung aufweisen, sind in Fig. 3a kegelartigen Scheiben 2' mit einer konkav gewölbten Mantelfläche dargestellt und in Fig. 3b kegelartige Scheiben 2'' mit einer konvex gewölbten Mantelfläche gezeigt.

Der Treibriemen 3 ist in den Ausführungsbeispielen der Fig. 1 und 2 als Keilriemen ausgebildet, wobei die Steigung des Keilriemens der Steigung der kegelartigen Scheiben 2 entspricht. Es ist jedoch auch denkbar, wie in den Fig. 3a und 3b prinzipiell dargestellt, daß der Treibriemen 3' einen runden Querschnitt aufweist. Besonders zweckmäßig ist es, um ein optimales Anpassen an die verwendeten kegelartigen Scheiben 2', 2'' zu erreichen, daß der runde Treibriemen 3' aus vollem Material besteht.

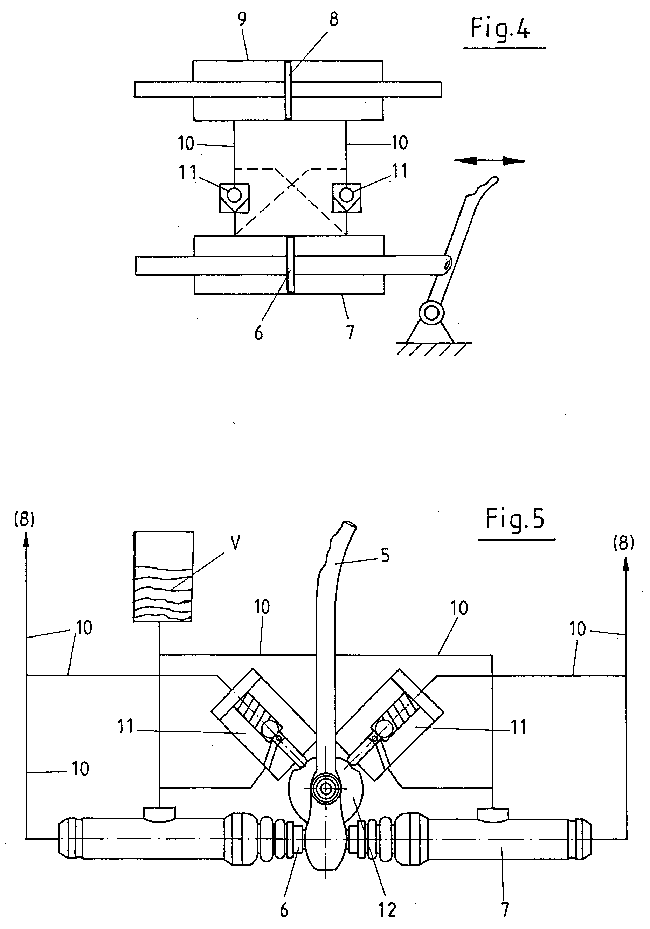

Fig. 4 zeigt eine bevorzugte Ausführungsform der erfindungsgemäß verwendeten Steuerung in prinzipieller Darstellung. Über einen Verstellhebel 5 wird ein in einem Steuerzylinder 7 verschieblich gelagerter Steuerkolben 6 bewegt. Die dabei strömende Flüssigkeit wirkt auf einen in einem Stellzylinder 9 angeordneten Stellkolben 8. Durch eine gewählte Übersetzung lassen sich somit große Kräfte auf den Stellkolben 8 übertragen. Die entsprechend benötigten Hydraulikleitungen 10 und entsperrbaren Rückschlagventile 11 sind nur prinzipiell dargestellt.

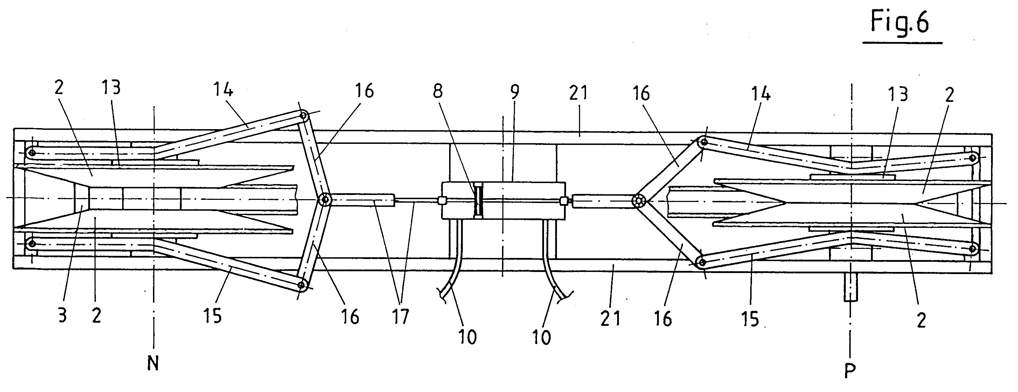

In Fig. 5 ist eine mögliche Ausführung der Betätigung der vorgenannten entsperrbaren Rückschlagventile 11 im Detail dargestellt. Dabei wird das jeweils zu entsperrende Rückschlagventil 11 mittels eines am Verstellhebel 5 befindlichen Entsperrnockens 12 betätigt, so daß ein funktionierender Strömungskreislauf der Hydraulikflüssigkeit gewährleistet ist. Ein nur angedeuteter Vorratsbehälter V stellt ein ausreichendes Hydraulikflüssigkeitsvolumen zur Verfügung. Das verschobene Volumen gelangt in eine Kammer im Stellzylinders 9. Gleichzeitig wird mit dem Verstellhebel 5 ein Rückschlagventil 11 entsperrt, durch das das komprimierte Volumen der anderen Zylinderkammer entweichen kann. In der Ruhestellung des Verstellhebels 5 sind alle Ventile dicht, und somit bleibt der eingestellte Zustand unbegrenzt erhalten. Damit ist sichergestellt, daß keine Steuerenergie verbraucht wird. Die Hydraulikflüssigkeit läuft in einem geschlossenen Kreis mit nur einem kleinen Vorratsbehälter V.

Bei der in Fig. 6 dargestellten und insoweit bevorzugten Ausführungsform tragen zwei Verstellwellen, eine Pedalwelle P und eine Nabenwelle N, die kegelartigen Scheiben 2, die zwar verschiebbar aber verdrehsicher auf den Wellen P und N montiert sind. Weiterhin sind Druckscheiben 14 montiert, die die axiale Verstellung der Scheiben 2 bewirken. Ein Hebelpaar 14, 15 auf jeder Welle P, N steuert die symmetrische Verstellung der Scheiben 2 gegeneinander. Damit ist gewährleistet, daß der Treibriemen 3 immer in derselben Ebene läuft.

Das Hebelpaar 14, 15 ist mit jeweils einem kurzen Koppelhebel 16 an einem Ende der Kolbenstange 17 des Stellkolbens 8 befestigt. Die Bewegung der Kolbenstange 17 spreizt somit das Hebelpaar 14, 15 auf der einen Seite und zieht es auf der anderen zusammen. Damit verschieben sich die Scheiben 2 symmetrisch auf jeder Welle, jeweils in entgegengesetzter Richtung.

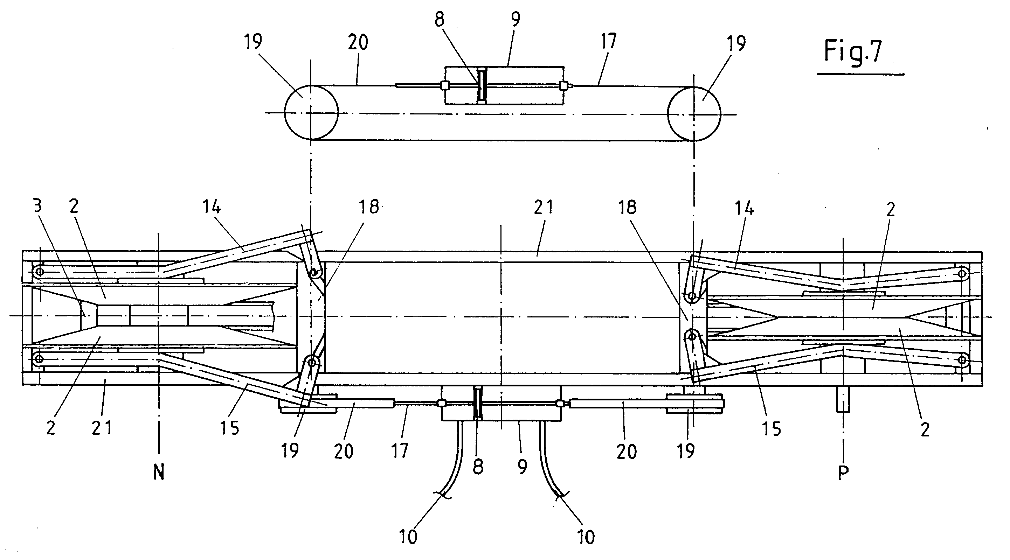

Bei dieser Konstruktionsvariante ist die Einschränkung zu machen, daß durch die Kopplung der Hebel 14, 15, 16 mit festen Hebelverhältnissen bei extremen Übersetzungen nur ein ungenügender Einstellbereich erzielt werden kann. Die Spannrolle macht einen erheblichen Weg zur Erzielung der benötigten Vorspannung. Die bei diesen Übersetzungen benötigten unterschiedlichen (variablen) Hebelverhältnisse können mit der folgenden Variante gemäß Fig. 7 umgangen werden:

In einer weiteren Welle 18 sind nicht näher bezeichnete Steuernuten eingefräst, in der die Hebelpaare 14, 15 angelenkt sind. Ein Verdrehen dieser Welle 18 verändert somit den Abstand der Scheiben 2 und somit das Übersetzungsverhältnis. Die Auslegung jeder Steuernut ist in weiten Grenzen frei. Ein Hebel an dieser Welle kann mit dem Ende der Kolbenstange 17 verbunden werden. Dies kann unmittelbar geschehen, oder aber, wie in Fig. 7 dargestellt, über einen auf zwei Zahnriemenscheiben 19 geführten Zahnriemen 20, welcher mit geeigneten Mitteln mit der Kolbenstange 17 verbunden ist.

Bei beiden Varianten gemäß der bevorzugten Ausführungsbeispiele nach Fig. 6 und 7 werden alle Teile zwischen Seitenwangen 21 montiert.

## Patentansprüche

1. Riemengetriebe für Fahrräder od. dgl., mit wenigstens zwei, jeweils in ihrem Wirkdurchmesser stufenlos vertellbaren Umlenkeinheiten und wenigstens einem mit den Umlenkeinheiten zusammenwirkenden Treibriemen, wobei jede Umlenkeinheit zwei kegelartige Scheiben aufweist und wobei ein Verstellantrieb zur axialen Verstellung zweier zusammenwirkender kegelartiger Scheiben vorgesehen ist, **dadurch gekennzeichnet**, daß die von dem Treibriemen (3) umschlungenen Umlenkeinheiten (1) auf der Pedalwelle (P) und auf der Nabenwelle (N) jeweils schwimmend gelagert sind und daß eine Steuerung zur abgestimmten, gegenläufigen Verstellbewegung der Umlenkeinheiten (1) vorgesehen ist.

2. Riemengetriebe nach Anspruch 1,
**dadurch gekennzeichnet**, daß die kegelartigen Scheiben (2) eine Mantelfläche mit konstanter Steigung aufweisen.

3. Riemengetriebe nach Anspruch 1,
**dadurch gekennzeichnet**, daß die kegelartigen Scheiben (2') eine konkav gewölbte Mantelfläche aufweisen.

4. Riemengetriebe nach Anspruch 1,
**dadurch gekennzeichnet**, daß die kegelartigen Scheiben (2'') eine konvex gewölbte Mantelfläche aufweisen.

5. Riemengetriebe nach einem der Ansprüche 1 bis 4
**dadurch gekennzeichnet**, daß die jeweils zusammenwirkenden kegelartigen Scheiben (2, 2', 2'') ineinandergreifend ausgebildet sind.

6. Riemengetriebe nach Anspruch 5,
**dadurch gekennzeichnet**, daß die jeweils zusammenwirkenden kegelartigen Scheiben (2, 2', 2'') radial verlaufende Eingriffsausnehmungen (4) aufweisen.

7. Riemengetriebe nach Anspruch 5,
**dadurch gekennzeichnet**, daß die jeweils zusammenwirkenden kegelartigen Scheiben (2, 2', 2'') parallel verlaufende Eingriffsausnehmungen (4') aufweisen.

8. Riemengetriebe nach einem der Ansprüche 1 bis 7,
**dadurch gekennzeichnet**, daß die jeweils zusammenwirkenden kegelartigen Scheiben (2, 2', 2'') gleichzeitig gegeneinander verstellbar sind.

9. Riemengetriebe nach einem der Ansprüche 1 bis 8,
**dadurch gekennzeichnet**, daß der Treibriemen (3) als Keilriemen ausgebildet ist.

10. Riemengetriebe nach einem der Ansprüche 1 bis 8,
**dadurch gekennzeichnet**, daß der Treibriemen (3') einen runden Querschnitt aufweist.

11. Riemengetriebe nach einem der Ansprüche 1 bis 10
**gekennzeichnet durch** einen mechanischen Verstellantrieb.

12. Riemengetriebe nach einem der Ansprüche 1 bis 11,
**gekennzeichnet durch** einen hydraulischen Verstellantrieb.

13. Riemengetriebe nach einem der Ansprüche 1 bis 12,
**gekennzeichnet durch** elektrohydraulischen Verstellantrieb.

14. Riemengetriebe nach einem der Ansprüche 1 bis 13,
**gekennzeichnet durch** elektrischen Verstellantrieb.

15. Riemengetriebe nach einem der Ansprüche 1 bis 14,
**gekennzeichnet durch** eine elektrische Steuerung.

16. Riemengetriebe nach einem der Ansprüche 1 bis 14,
**gekennzeichnet durch** eine elektronische Steuerung.

17. Riemengetriebe nach einem der Ansprüche 1 bis 14,
**gekennzeichnet durch** eine mechanische Steuerung.

18. Riemengetriebe nach einem der Ansprüche 1 bis 14,
**gekennzeichnet durch** eine hydraulische Steuerung.

19. Riemengetriebe nach einem der Ansprüche 1 bis 18,
**dadurch gekennzeichnet**, daß die Steuerung als Einhandbedienung ausgebildet ist.

20. Riemengetriebe nach einem der Ansprüche 1 bis 19,
**dadurch gekennzeichnet**, daß neben dem Verstellantrieb weitere Verstellmittel zur axialen Verstellung wenigstens zweier zusammenwirkender kegelartiger Scheiben (2, 2', 2'') vorgesehen sind.

21. Steuerung eines stufenlos verstellbaren Riemengetriebes für Fahrräder nach einem der Ansprüche 1 bis 20,
**dadurch gekennzeichnet**, daß die Steuerung einen Sensor zum Detektieren von äußeren Parametern und einen Mikroprozessor aufweist, der aufgrund der detektierten Werte eine Beeinflussung des Übersetzungsverhältnisses in Abhängigkeit von äußeren Parametern bewirkt.

22. Steuerung nach Anspruch 21,
**dadurch gekennzeichnet**, daß als äußerer Parameter die Fahrraddrehzahl gemessen wird.

23. Steuerung nach Anspruch 21,
**dadurch gekennzeichnet**, daß als äußerer Parameter die Tretnabendrehzahl gemessen wird.

24. Steuerung nach einem der Ansprüche 20 bis 23,
**dadurch gekennzeichnet**, daß als äußerer Parameter die Fahrradneigung bezüglich der Fahrwegsteigung gemessen wird.

25. Steuerung nach Anspruch 21,
**dadurch gekennzeichnet**, daß als äußerer Parameter die jeweilige Windsituation gemessen wird.

26. Steuerung nach einem der Ansprüche 21 bis 25,
**gekennnzeichnet durch** für bestimmte Geschwindigkeiten vorprogrammierbare Grundeinstellungen, die vom jeweiligen Fahrradbenutzer in bezug auf Alter, Geschlecht, Konstitution oder dgl. festlegbar sind.
